# FASCICULE DE BREVET EUROPEEN

(11) **EP 0 956 393 B1**
(45) Date de publication et mention de la délivrance du brevet: **07.08.2002**
(21) Numéro de dépôt: 97953957.4
(22) Date de dépôt: 26.12.1997
(51) Int. Cl.: E01F 9/018

(54) **POTEAUX ET BORNES A DISPOSITIF DE LIAISON AU SOL A LIMITE DE RUPTURE**
(LEIT-) PFOSTEN MIT SOLLBRUCHSTELLE IN DER VERANKERUNG
POLES AND TERMINALS EQUIPPED WITH CONNECTION TO THE GROUND WITH BREAKING POINT

(30) Priorité: 30.12.1996 FR 9616373
(43) Date de publication de la demande: 17.11.1999
(73) Titulaire: Chamel, Didier, 69510 Soucieu en Jarrest (FR); Pardon, Christian, 69009 Lyon (FR)
(72) Inventeur: CHAMEL, Didier, 69510 Soucieu en Jarrest (FR)
(74) Mandataire: Myon, Gérard Jean-Pierre
(86) Numéro de dépôt international: FR9702434
(87) Numéro de publication internationale: WO9829607

(56) Documents cités:
- CH-A- 572 131
- FR-A- 2 704 011
- US-A- 4 923 319

## Description

La présente invention a trait à un perfectionnement aux poteaux, bornes et analogues munis d'un dispositif de liaison au sol à limite de rupture, en particulier bornes anti-stationnement ou de poteaux de signalisation verticale utilisés dans la signalisation routière.

Le remplacement des bornes et poteaux endommagés à la suite d'un choc par un véhicule est relativement onéreux dans la mesure où il faut non seulement remplacer la pièce endommagée mais encore procéder à son descellement et au scellement de la pièce de remplacement.

Par le passé, on a donc proposé de fixer les bornes ou poteaux de signalisation à l'aide d'un dispositif de liaison au sol comportant une partie de rupture, de telle façon qu'en cas de choc par un véhicule, seule la pièce de liaison ou l'un de ses éléments soient déformés ou rompus. Il s'ensuit qu'en principe seuls la pièce de liaison et/ou l'élément correspondant sont à remplacer.

D'après le brevet américain n° 3 349 531, on connaît notamment un tel dispositif de liaison. Ce document prévoit de fixer le poteau au sol par l'intermédiaire d'un socle scellé et présentant un tube creux au diamètre du poteau, la liaison entre ce tube creux et le poteau étant assurée par une pièce de liaison qui vient se placer pour moitié dans ce tube creux et pour l'autre moitié dans le poteau. Cette pièce de liaison présente un amincissement circonférentiel médian destiné à former la zone de déformation ou de rupture. Cette pièce de liaison peut être percée dans sa longueur de façon à recevoir une élingue destinée à maintenir ensemble le poteau et le socle lorsque la pièce de liaison s'est rompue. Le principal inconvénient de ce dispositif consiste dans le risque d'endommagement des arêtes en regard du poteau et du socle. En effet lors d'un choc important, entraînant la rupture complète de la pièce de liaison, les bords du poteau et du socle peuvent venir se heurter violemment entre eux ou avec une partie de la pièce de liaison.

Par le brevet américain n° 3 912 405, on connaît un autre dispositif de ce type, comportant une pièce de liaison dont une partie vient s'intercaler entre le poteau et le tube scellé dans le sol, en ayant le même diamètre que ce dernier mais en présentant une zone amincie de rupture. A l'intérieur de cette pièce de liaison s'étend un fer plat destiné à maintenir ensemble poteau et tube scellés après rupture de la pièce de liaison. La géométrie de ce fer plat n'est pas favorable au bon fonctionnement de ce dispositif en dehors d'un choc perpendiculaire au plan de cette pièce.

Le brevet américain n° 4,923,319, divulguant les préambules des revendications indépendantes, décrit des pièces de liaison entre pieu d'ancrage et poteau formées d'une tige, apte à être fixée de manière amovible au pieu d'ancrage et au poteau et présentant une zone de rupture. Ces pièces de liaison peuvent être utilisées dans un dispositif de liaison qui se situe hors du sol et qui comporte deux platines circulaires de diamètre sensiblement supérieur au diamètre du poteau et du pieu d'ancrage. La liaison entre ces platines est réalisée par les pièces de liaison précitées, qui présentent une zone de rupture et sont placées à la périphérie de ces platines.

Enfin, FR-A-2 704 011 décrit des dispositifs de liaison entre poteaux et pieux d'ancrage, formés d'une pièce à point de rupture qui peut être un plot fixé par boulonnage et muni d'une saignée formant zone de rupture. Il peut s'agir d'une pièce rectangulaire en deux parties, munies de perçage en regard, dans lesquels viennent se placer des tiges de liaison cassantes.

La présente invention a pour objectif de fournir un dispositif de liaison amélioré assurant pleinement son rôle tout en évitant tout endommagement du poteau comme du socle.

Un autre objectif de l'invention est de fournir un tel dispositif qui puisse être adapté à des poteaux de formes géométriques différentes.

Un autre objectif encore de l'invention est de fournir un dispositif qui puisse être utilisé avec un socle ne dépassant pas du niveau du sol.

Un autre objectif encore de l'invention est de pouvoir proposer un tel dispositif ne présentant pas de partie en saillie par rapport au poteau même sur sol incliné.

La présente invention a pour objet un poteau, borne ou analogue formé d'un pieu d'ancrage et d'un montant, notamment un tube, pieu d'ancrage et montant étant reliés ensemble par une pièce de liaison, de préférence cylindrique, présentant une zone de moindre résistance, l'ensemble étant agencé de manière que les bords en regard du pieu d'ancrage et du montant laissent subsister entre eux un espace dans lequel apparaît ladite zone de moindre résistance, la pièce de liaison présentant éventuellement un perçage central longitudinal recevant une élingue ou analogue conformée pour assurer un lien entre pieu d'ancrage et montant après rupture de la pièce de liaison, caractérisé en ce que à leurs extrémités en regard, le pieu et le montant comprennent chacun une platine, les deux platines étant en regard l'une de l'autre et présentant chacune un perçage central apte à recevoir la pièce de liaison et l'une au moins de ces platines présente une surface inclinée de son centre vers sa périphérie de manière que l'écart entre les deux platines en regard soit plus grand à la périphérie du poteau qu'en son centre.

La pièce de liaison est donc centrée sur l'axe médian du poteau et du pieu d'ancrage.

Le dispositif de liaison selon l'invention, formé des deux platines et de la pièce de liaison, peut être utilisé pour tout mobilier urbain fixé au sol par un ou plusieurs montants ou poteaux. Sans que cela soit exhautif, on peut citer poteaux ou bornes anti-stationnement, barrières, bancs, candélables, mâts de signalisation, notamment de signalisation routière, supports et panneaux publicitaires, bornes lumineuses, supports en tout genres, tels que supports de poubelle.

L'expression poteau, borne ou analogue entend donc couvrir l'ensemble des possibilités.

De préférence, la surface inclinée de la platine est une surface de forme générale convexe Avantageusement, la courbure ou l'angle de la surface inclinée est choisi de manière que la pièce de liaison casse avant contact entre les platines. La courbure permet en tout état de cause d'éviter tout contact entre les bords des platines. Les contacts éventuels se feront dans des zones résistantes des platines. En outre, les platines peuvent être avantageusement des pièces pleines ou d'épaisseur supérieure à l'épaisseur des poteaux, et donc présenter une grande résistance.

Selon l'invention, les platines peuvent avoir un diamètre extérieur identique ou différent à celui du pieu d'ancrage ou du montant qui les portent. Il sera très avantageusement identique lorsque platine et poteau seront hors sol afin de ne pas augmenter l'encombrement et d'éviter toute partie en saillie. La ou les platines peuvent être fixées de manière définitive, par exemple par soudure ou en étant réalisées d'un seul tenant, avec le montant et/ou le pieu d'ancrage, ou encore être fixées de manière amovible par tout moyen connu en soi.

Suivant une modalité particulièrement avantageuse, pieu d'ancrage et platine correspondante sont fixés entre eux de manière amovible et sont agencés de manière à pouvoir être placés au-dessous du niveau du sol ou sensiblement à ce niveau. On prévoit un joint circulaire, de préférence plat, souple entre les deux platines, de préférence à leur périphérie. Ce mode de réalisation permet d'assurer une certaine étanchéité et de rendre invisible l'adaptation du poteau ou borne tout en permettant un changement aisé de la pièce de liaison après un choc. Le diamètre extérieur du joint est de préférence supérieur ou égal à celui de la platine supérieure ou du montant, ce qui permet avantageusement de préserver le scellement et la platine en cas de rupture. En cas de rupture, la platine supérieure reliée au montant n'entre pas en contact avec le scellement, mais avec le joint. De préférence, les joints sont choisis d'un diamètre supérieur au diamètre des platines.

Suivant un mode de réalisation particulier, on prévoit un joint circulaire plat souple entre les deux platines et ne dépassant pas de celles-ci, ainsi qu'un deuxième joint circulaire venant se placer à la périphérie du précédent, ce joint étant conformé pour pouvoir s'adapter sensiblement à l'inclinaison au sol. Il peut donc s'agir d'un deuxième joint plat, d'un joint présentant une surface inclinée ou encore, de préférence, d'un joint plat coupé en deux parties suivant un plan incliné de tel façon que, dans le cas d'un sol horizontal ou sensiblement horizontal, l'on utilise le joint sous sa forme plate et, dans le cas, d'un sol incliné, l'on tourne l'un des deux joints de 180°, de façon que les épaisseurs maximales des deux joints viennent coïncider. Dans ce dernier cas, l'on peut utiliser un joint plat coupé de façon inégale de façon à proposer à l'utilisateur, à partir d'un même jeu de joint, différentes possibilités en fonction de l'inclinaison du sol, l'utilisateur pouvant simplement utiliser l'un ou l'autre des deux demi-joints ainsi réalisés ou l'association des deux.

Suivant un mode de réalisation préféré de l'invention, particulièrement adapté à un placement au-dessous du niveau du sol, la platine fixée au pieu d'ancrage est formée d'une première demi-platine solidaire du pieu d'ancrage et présentant un logement pour recevoir d'une part une extrémité de la pièce de liaison et d'autre part une deuxième demi-platine présentant le perçage pour la pièce de liaison et des moyens de fixation amovible dans le logement de la première demi-platine, en ce que la pièce de liaison présente l'extrémité (par exemple une collerette) conformée pour se placer dans le logement de la première demi-platine et y être immobilisée de manière amovible lorsque la deuxième demi-platine est en place, et en ce que, de préférence, cette demi-platine présente la surface inclinée ou convexe. La liaison amovible entre les deux demi-platines peut être réalisée par tout moyen connu, par exemple au moyen de vis ou mieux d'un système de fixation à baïonnette ou à ergots avec de préférence un verrouillage par vis ou analogue.

Pieu d'ancrage et platine correspondante peuvent aussi être une seule et même pièce et présenter des moyens de fixation sur une surface. Cette réalisation est adaptée en particulier, mais pas exclusivement, à une fixation sur une surface verticale pour la suspension d'enseignes ou de panneaux de signalisation.

De préférence, la pièce de liaison comporte, à proximité de l'une au moins de ses deux extrémités, une gorge circulaire et la platine comprend un ou plusieurs perçages destinés à recevoir des moyens, par exemple des pointeaux ou vis, venant s'insérer dans la gorge pour maintenir en place la pièce de liaison, cette gorge étant en outre séparée de la surface extérieure de la pièce de liaison par une zone de diamètre, constant ou non, intermédiaire entre le diamètre de la pièce de liaison et celui de la gorge.

Suivant une modalité avantageuse de l'invention, à sa partie destinée à être fixée au poteau, borne ou analogue proprement dit, la platine supérieure est agencée de manière à pouvoir recevoir des poteaux, bornes ou analogues de diamètres différents. On peut par exemple prévoir à cette fin deux, ou plus, épaulements de sections ou diamètres différents, allant en décroissant depuis la périphérie de la platine, chaque section ou diamètre pouvant recevoir des poteaux de section ou diamètre correspondant.

Ces épaulements peuvent s'inscrire dans un même plan orthogonal à l'axe médian du dispositif de liaison ou dans des plans différents, avec, de préférence, la réduction de section ou diamètre se faisant en direction opposée à l'emplacement de la pièce de liaison. Les épaulements pourront être de toute forme en fonction de la forme géométrique du poteau, e.g. circulaire, ovale, rectangulaire, carrée, etc.

L'invention a aussi pour objet le dispositif de liaison formé par les deux platines et par la pièce de liaison, tels que définis précédemment. De manière générale, ce dispositif comprend une pièce de liaison présentant une zone de moindre résistance et deux platines présentant chacune un perçage central ayant un diamètre intérieur légèrement supérieur au diamètre extérieur de la pièce de liaison, les deux platines étant aptes à être montées sur la pièce de liaison et à se faire face par des surfaces en regard dont l'une au moins comporte une surface inclinée de son centre vers sa périphérie, de préférence de forme générale convexe, la pièce de liaison étant conçue pour pouvoir être immobilisée de façon amovible par rapport aux deux platines, si bien qu'après immobilisation des trois pièces les unes par rapport aux autres subsiste un espace entre les deux surfaces, dans lequel apparaît la zone de moindre résistance.

L'invention va être maintenant décrite plus en détail à l'aide de modes de réalisation pris à titre d'exemples non limitatifs et se référant au dessin dans lequel :
- la figure 1 représente une vue en coupe partielle d'un poteau selon l'invention ;
- les figures 2 et 3 montrent en coupe partielle deux autres modes de réalisation prévus pour que le pieu d'ancrage et sa platine puissent être placés au-dessous du niveau du sol ;
- la figure 4 représente en coupe une platine selon un mode de réalisation particulier
- la figure 5 est une vue en coupe partielle d'un autre mode de réalisation et ;
- la figure 6, représente schématiquement un mode d'adaptation à un sol incliné et une platine supérieure à épaulements.

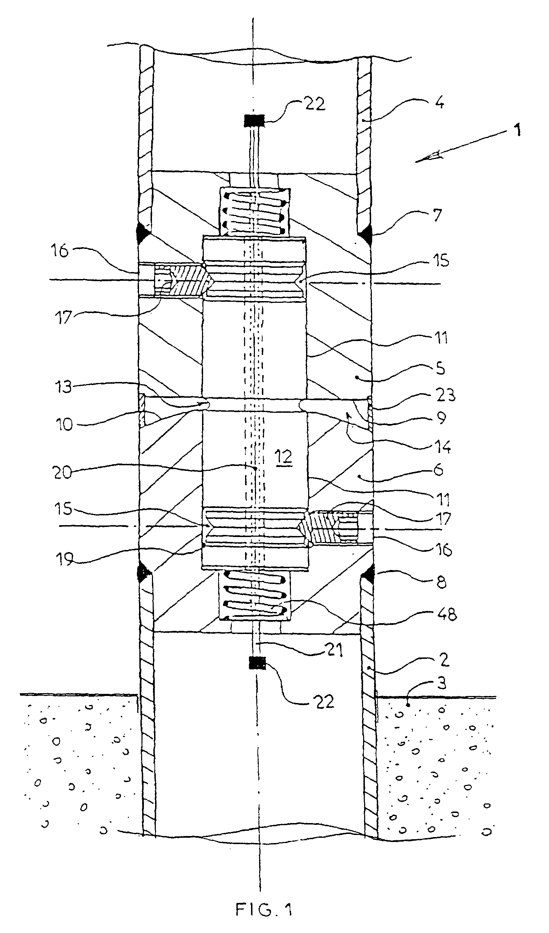

On se réfère tout d'abord à la figure 1.

Cette figure montre un poteau de signalisation 1 comprenant un pieu d'ancrage ou embase 2 scellé dans le sol 3 et le poteau proprement dit 4. Poteau et pieu d'ancrage sont formés d'un tube cylindrique en métal. On voit à la figure 1 que le poteau et le pieu d'ancrage comportent chacun une platine 5, respectivement 6. Chaque platine est emmanchée dans le poteau ou le pieu correspondant et fixée par un cordon de soudure 7, respectivement 8. Bien entendu, d'autres moyens de fixation peuvent être prévus pour les platines.

Les surfaces en regard des platines 5 et 6 sont référencées 9, respectivement 10. La surface 9 est plane tandis que la surface 10 présente une courbure de façon à conférer une forme généralement convexe à la surface 10.

Les deux platines 5 et 6 présentent un perçage central 11 de forme généralement cylindrique, adapté à recevoir étroitemcnt une pièce de liaison 12 présentant un amincissement circonférentiel 13. Lorsque la pièce de liaison est en place, elle laisse subsister un espace 14 entre les deux surfaces 9, 10 des platines 5, 6, espace dans lequel s'inscrit l'amincissement circonférentiel 13. On voit clairement que les perçages centraux 11 et la pièce de liaison 12 sont centrés sur l'axe médian du pieu et du montant ou poteau proprement dit.

Au voisinage de chacune de ses deux extrémités, la pièce de liaison 12 présente une gorge 15. Au regard de cette gorge lorsque la pièce de liaison 12 est en place, chacune des platines 5 et 6 présente trois perçages transversaux 16 filetés destinés à recevoir des pointeaux filetés 17 dont l'extrémité intérieure vient s'engager dans la gorge pour maintenir en place la pièce de liaison. On remarquera que la gorge 15 présente une forme complexe avec une partie destinée à recevoir le pointeau en position de fixation et une partie 19 de diamètre intermédiaire entre le diamètre extérieur de la pièce de liaison et le diamètre de cette gorge, cette partie 19 étant prévue pour permettre un démontage aisé, même en cas de choc de grande intensité avec risque d'endommagement au point de contact entre pointeau et gorge.

La pièce de liaison 12 comporte un orifice central longitudinal 20 recevant une élingue 21, qui peut être une élingue souple ou plus ou moins rigide, destinée à maintenir attachés ensemble pieu d'ancrage et poteau après rupture de la pièce de liaison. Pour ce faire, les extrémités de l'élingue sont munies de pièces d'arrêt 22 de diamètre supérieur à l'orifice 20.

On pourra utiliser une élingue rigide, notamment pour des poteaux relativement hauts, conçue pour éviter que le montant ne tombe trop rapidement au sol après rupture de la pièce de liaison.

Le repère numérique 23 désigne un joint destiné à obturer l'espace 14 à des fins d'étanchéification et d'esthétisme. Il peut s'agir d'un joint en matière plastique ou encore d'un joint en métal.

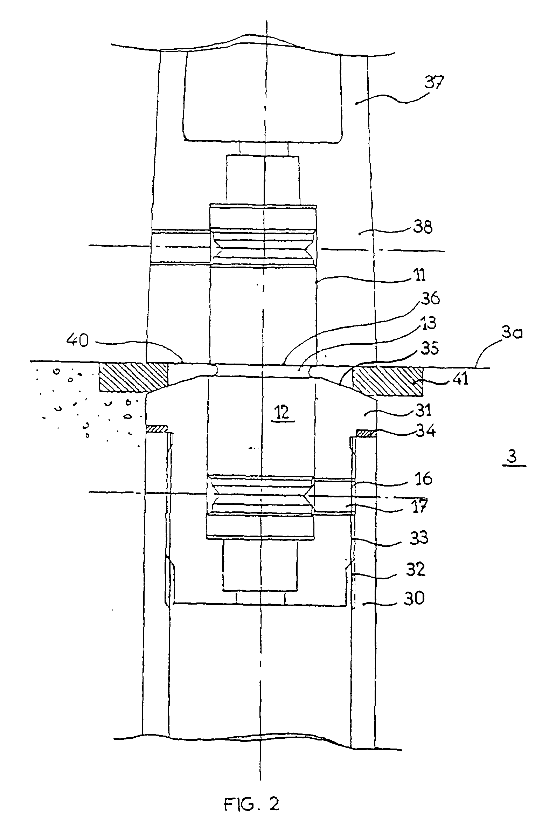

On se réfère maintenant à la figure 2 qui représente un mode de réalisation de l'invention dans lequel le dispositif de rupture est rendu invisible par le fait qu'il se situe en dessous du niveau du sol, ce qui permet de ne pas modifier sensiblement l'aspect extérieur du poteau. Cela est particulièrement intéressant dans le domaine des bornes anti-stationnement et notamment des bornes ou petits poteaux ayant en même temps un rôle décoratif, notamment réalisés en fonte, acier inoxydable pouvant avoir des formes diverses, à savoir de diamètres constants ou de diamètres irréguliers, par exemple de forme générale conique, triangulaire, ovale.

Le pieu d'ancrage 30, scellé dans le sol 3, présente un filtage intérieur 32 destiné à coopérer avec un filtage extérieur 33 porté par la platine 31. Un joint d'étanchéité circulaire plat 34 est prévu entre la platine et le pieu d'ancrage de façon à assurer l'étanchéité vis-à-vis du filetage.

Comme dans le mode de réalisation précédent, la platine 31 présente les trois perçages 16 destinés à laisser passer les pointeaux 17 destinés à la fixation de la pièce de liaison 12 dans la platine 31. On remarquera que l'accès au pointeau de la platine 31 ne peut s'effectuer qu'après dévissage et retrait de la platine 31 vis-à-vis du pieu d'ancrage 30.

Le pieu d'ancrage et la platine 31 sont placés dans le sol de façon que la surface 35 de la platine 31, qui est ici une surface de forme généralement convexe, se trouve légèrement en dessous du niveau 3a du sol. On remarquera que, dans ce mode de réalisation, lorsque la pièce de liaison 12 est en place, l'arête 36, de la pièce de liaison 12, qui définit vers le haut l'amincissement circonférentiel 13, se trouve sensiblement au niveau du sol.

Le poteau 37 est ici directement fabriqué avec la platine 38. Il s'agit ici d'un poteau en fonte essentiellement creux mais présentant une partie initialement pleine dans laquelle on peut former en fonderie une ébauche permettant l'usinage subséquent des perçages destinés à recevoir la pièce de liaison 12 et l'extrémité de l'élingue 21, et des perçages destinés à recevoir les trois pointeaux 17.

La surface inférieure 40 de la platine 38 est ici une surface plane. Lorsque l'ensemble est monté, on remarque que cette surface 40 se trouve sensiblement au niveau du sol, dans le plan de l'arête 36. Lors du montage, on interpose, entre les surfaces 40 et 35, un joint circulaire plat 41, souple, qui, en cas de choc, pourra se déformer sous l'effet de la déformation de la pièce de liaison 12 , ce qui évitera tout endommagement du scellement.

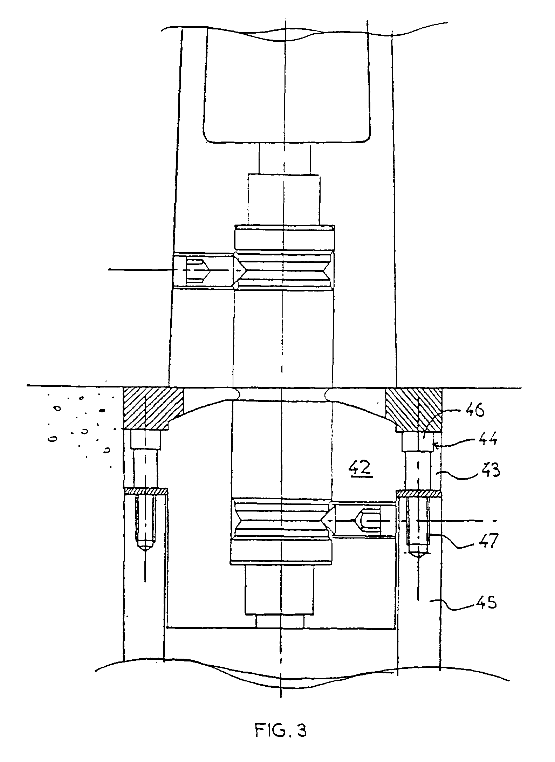

La figure 3 représente une variante de réalisation de la figure 2, dans laquelle la fixation de la platine inférieure est réalisée différemment.

Cette platine 42 présente une collerette périphérique 43 présentant des perçages 44 venant en regard de perçages correspondants 47 filetés et réalisés dans le pieu d'ancrage 45. On comprend donc que la platine 42 est fixée sur le pieu d'ancrage par vissage au moyen de vis 46.

Bien entendu d'autres variantes de fixation de la platine inférieure peuvent être envisagées, comme la réalisation d'un système à baïonnette.

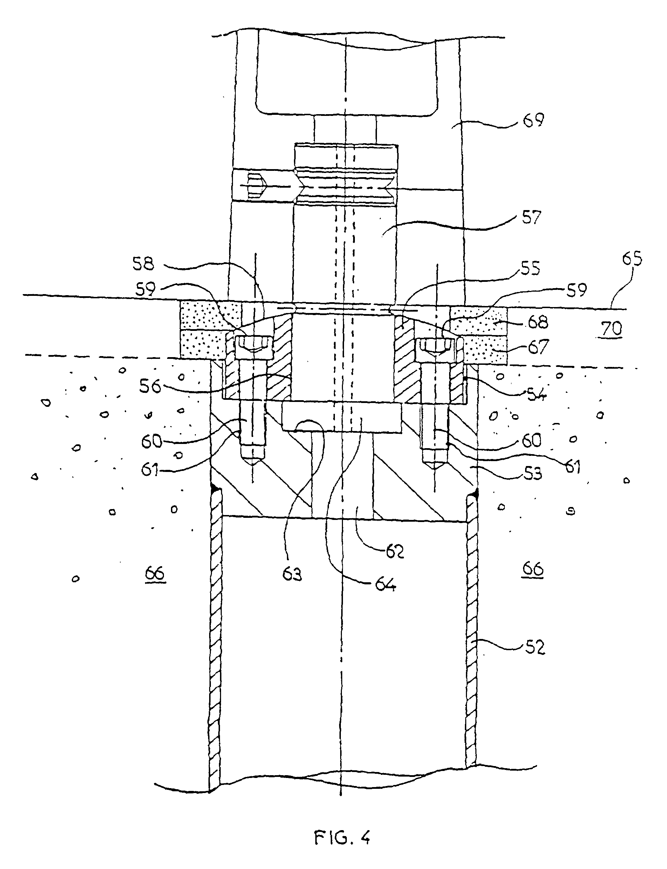

La figure 4 montre le mode de réalisation préféré dans le cas d'une liaison en dessous du niveau du sol. La platine fixée au pieu d'ancrage 52 est formée d'une demi-platine 53 soudée au pieu et présentant à sa partie supérieure un logement 54 circulaire destiné à recevoir l'autre demi-platine 55. Cette demi-platine 55 présente en son centre un perçage 56 adapté pour recevoir une pièce de liaison 57. La demi-platine 55 présente une courbure 58 allant du perçage 57 à la périphérie de la demi-platine 55. Dans la région de cette courbure 58, elle présente en outre des perçages 59 pour le passage de vis 60 destinées à fixer les deux demi-platines 55 et 53 entre elles par vissage dans des trous filetés 61 correspondants. La demi-platine 53 présente en outre un perçage central 62 avec, à sa partie supérieure, une partie 63 de plus grand diamètre. La pièce de liaison 57 présente une collerette 64 qui, en se logeant dans la partie 63, pourra être immobilisée en place par la fixation de la demi-platine 55 sur l'autre 53 par les vis 60.

Comme dans les mode de réalisation des figures 2 et 3, cet ensemble est scellé au-dessous du niveau du sol 65. Le scellement proprement dit 66 s'arrête, vers le haut, à l'extrémité supérieure de la demi-platine 53. Cela est symbolisé par le trait interrompu à la figure 4. Deux joints circulaire 67, 68 (ou un joint unique) sont placés entre cette extrémité et la surface 65. L'on voit que, comme aux figures 2 et 3, le poteau 69 sera en contact avec ce joint, qui est déformable.

L'espace 70 entre la surface 65 et le scellement 66 est comblé par un matériau approprié tel que pierre, ciment, asphalte, etc.

Pour le reste, la pièce de liaison comprend comme précédemment l'amincissement circonférentiel, la gorge pour la venue en prise des pointeaux de fixation au poteau et le perçage central longitudinal avec l'élingue.

Un moyen élastique tel qu'un ressort 48 (figure 1) peut être prévu entre la platine et l'extrémité de la pièce de liaison, pour faciliter le retrait de cette dernière de son logement dans la platine.

Dans les différents modes de réalisation, pieu d'ancrage et platiné associée peuvent avoir des dimensions standards pour être utilisables avec des poteaux et platines associés de formes et diamètres variés.

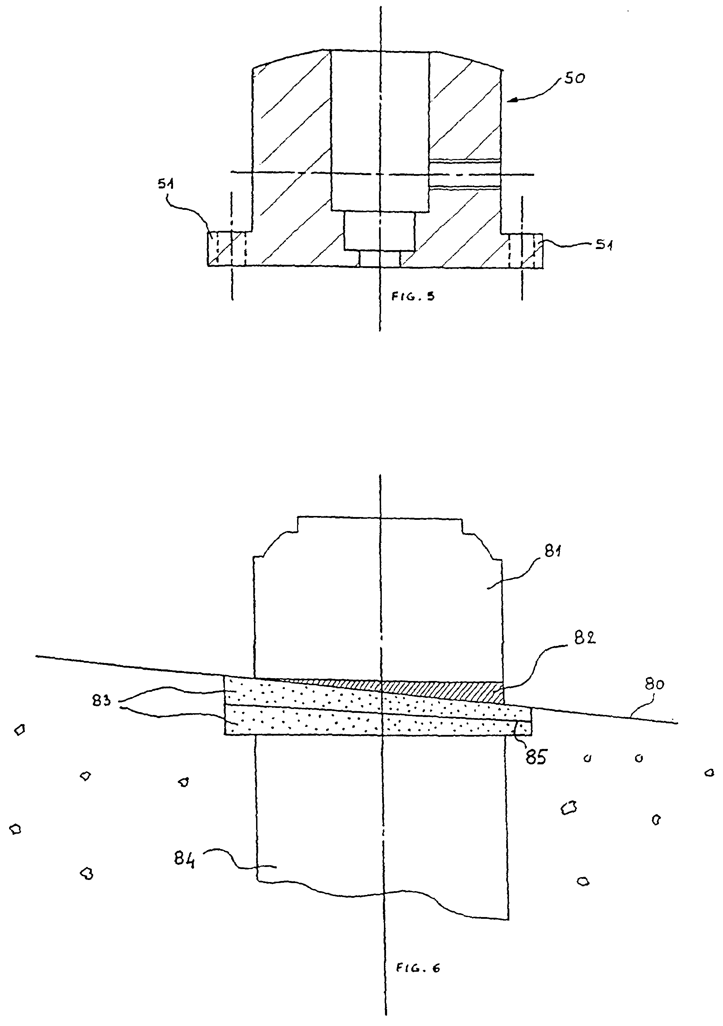

On se réfère maintenant à la figure 5. Il y est représenté une platine 50 présentant des pattes de scellement 51 permettant de fixer la platine 50 sur une surface verticale. La platine 50 présente par ailleurs les caractéristiques lui permettant d'accueillir une pièce de liaison selon l'invention. La platine 50 fait donc office ici de pieu d'ancrage destiné notamment à une signalisation murale ou à des enseignes.

Dans tous les cas, le dispositif de liaison peut être adapté pour la mise en place sur une surface (trottoir, chaussée), inclinée 80, le poteau avec sa platine supérieure 81 demeurant vertical (voir figure 6). On peut notamment utiliser un jeu de 2 joints 82, 83 circulaires. L'un 82 est de section constante et se place dans l'espace entre les deux platines 81, 84 dans lequel il s'inscrit en totalité. L'autre joint 83 est un joint plat coupé en deux suivant un plan incliné 85 et donnant deux parties sensiblement égales. Ce joint 83 peut être utilisé sous sa forme plate en cas de sol horizontal ou, comme cela est représenté à la figure 6 (sol incliné), après retournement de l'une des deux parties sur 180°, sous sa forme inclinée afin de suivre l'inclinaison du sol.

En variante, le plan incliné 85 peut donner deux parties inégales ce qui permet une plus grande souplesse d'utilisation, l'installateur pouvant mettre en place l'une ou l'autre des deux parties d'inclinaisons différentes ou les deux superposées, selon la pente du sol.

On pourrait encore recourir à un jeu spécifique de joints 83 de formes différents.

On voit aussi à la figure 6 qu'à sa partie supérieure, la platine supérieure 81 présente deux épaulements de diamètres différents permettant de recevoir deux diamètres de poteau.

Pieu d'ancrage, poteau proprement dit, platines, pièces de liaison pourront bien entendu être réalisés dans différentes matières. Les poteaux peuvent en général être réalisés en métal, tel que fer, aluminium, fonte, ou en matière plastique, voire en bois. Le dispositif de liaison selon l'invention pourra être réalisé en métal, notamment en acier ou en laiton, ou encore en matière plastique, notamment matière plastique renforcée. Bien entendu, le dispositif selon l'invention peut être adapté aux différentes formes géométriques que peuvent présenter les poteaux en général. De même, l'homme du métier pourra sélectionner les matériaux constitutifs en fonction de la résistance voulue au choc.

## Revendications

1. Poteau, borne ou analogue (1) formé d'un pieu d'ancrage (2 ; 30 ; 45 ; 52) et d'un montant (4 ; 37), notamment un tube, pieu d'ancrage et montant étant reliés ensemble par une pièce de liaison (12 ; 57) présentant une zone (13) de moindre résistance, l'ensemble étant agencé de manière que les bords en regard du pieu d'ancrage et du montant laissent subsister entre eux un espace (14) dans lequel apparaît ladite zone de moindre résistance, la pièce de liaison (12 ; 57) présentant éventuellement un perçage central longitudinal (20) recevant une élingue ou analogue (21) conformée pour assurer un lien entre pieu d'ancrage et montant après rupture de la pièce de liaison, le pieu et le montant comprenant chacun une platine (5, 6 ; 31 ; 38 ; 42 ; 53, 55) à leurs extrémités en regard, les deux platines étant en regard l'une de l'autre, **caractérisé en ce que** les deux platines présentent chacune un perçage central (11 ; 56, 63) apte à recevoir la pièce de liaison (12 ; 57) et l'une au moins de ces platines présente une surface (10 ; 35 ; 58) inclinée de son centre vers sa périphérie de manière que l'écart entre les deux platines en regard soit plus grand à la périphérie du poteau qu'en son centre.

2. Poteau selon la revendication 1, **caractérisé en ce que** la surface inclinée (10 ; 35 ; 58) de la platine est une surface de forme générale convexe.

3. Poteau selon la revendication 1 ou 2, **caractérisé en ce que** la ou les platines sont fixées de manière amovible au montant et/ou au pieu d'ancrage.

4. Poteau selon la revendication 1 ou 2, **caractérisé en ce que** la platine fixée au pieu d'ancrage (52) est formée d'une première demi-platine (53) solidaire du pieu d'ancrage (52)
et présentant un logement (63, 54) pour recevoir d'une part une extrémité (64) de la pièce de liaison (57) et d'autre part une deuxième demi-platine (55) présentant le perçage (56) pour la pièce de liaison (57) et des moyens (59, 60) de fixation amovible dans le logement (54) de la première demi-platine (53), **en ce que** la pièce de liaison (57) présente l'extrémité (64), par exemple une collerette, conformée pour se placer dans le logement (63) de la première demi-platine (53) et y être immobilisée de manière amovible lorsque la deuxième demi-platine (55) est en place, et **en ce que**, de préférence, cette demi-platine (55) présente la surface inclinée ou convexe.

5. Poteau selon l'une des revendications 1 à 4, **caractérisé en ce que** pieu d'ancrage (30 ; 45) et platine (31 ; 42) correspondante sont fixés entre eux de manière amovible et sont agencés de manière à pouvoir être placés au-dessous du niveau (3a) du sol (3) ou sensiblement à ce niveau.

6. Poteau selon la revendication 5, **caractérisé en ce qu'**on prévoit un joint circulaire plat souple (41 ; 67, 68) entre les deux platines, de préférence à leur périphérie, le diamètre extérieur du joint étant de préférence supérieur à celui du montant.

7. Poteau selon la revendication 5, **caractérisé en ce qu'**on prévoit un joint circulaire plat souple (82) entre les deux platines (81, 84) et ne dépassant pas de celles-ci, ainsi qu'un deuxième joint circulaire (83), venant se placer à la périphérie du joint (82), ce joint (83) étant conformé pour pouvoir s'adapter sensiblement à l'inclinaison du sol.

8. Poteau selon l'une quelconque des revendications 1 et 2, **caractérisé en ce que** la ou les platines (38) sont réalisées d'un seul tenant avec le montant (37) et/ou le pieu d'ancrage.

9. Poteau selon l'une quelconque des revendications 1 et 2, **caractérisé en ce que** pieu d'ancrage et platiné correspondant sont une seule et même pièce, qui présente en outre des moyens de fixation adaptés à une fixation sur une surface verticale.

10. Poteau selon l'une quelconque des revendications 1 à 9, **caractérisé en ce que** la pièce de liaison (12) comporte, à proximité de l'une au moins de ses deux extrémités, une gorge circulaire (15) et la platine comprend un ou plusieurs perçages (16) destinés à recevoir des moyens (17) venant s'insérer dans la gorge pour maintenir en place la pièce de liaison (12), cette gorge (15) étant en outre séparée de la surface extérieure de la pièce de liaison (12) par une zone (19) de diamètre, constant ou non, intermédiaire entre le diamètre de la pièce de liaison (12) et celui de la gorge (15).

11. Dispositif de liaison apte à relier ensemble deux parties de poteau, comprenant une pièce de liaison présentant une zone de moindre résistance et deux platines aptes à être montées sur la pièce de liaison, **caractérisé en ce que** ces deux platines présentent chacune un perçage central ayant un diamètre intérieur légèrement supérieur au diamètre extérieur de la pièce de liaison, les deux platines étant aptes à se faire face par des surfaces en regard dont l'une au moins comporte une surface inclinée de son centre vers sa périphérie, de préférence de forme générale convexe, la pièce de liaison étant conçue pour pouvoir être immobilisée de façon amovible par rapport aux deux platines, si bien qu'après immobilisation des trois pièces les unes par rapport aux autres subsiste un espace entre les deux surfaces, dans lequel apparaît la zone de moindre résistance.

## Patentansprüche

1. Pfosten oder dergleichen (1), bestehend aus einem Verankerungspfahl (2; 30; 45; 52) und einer Stütze (4; 37), insbesondere einem Rohr, wobei Verankerungspfahl und Stütze durch ein Verbindungsstück miteinander verbunden sind, das einen Bereich (13) verringerten Widerstandes aufweist, wobei die Anordnung so ausgebildet ist, daß die dem Verankerungspfahl und der Stütze gegenüberstehenden Kanten zwischen sich einen Raum (15) bestehen lassen, in dem der Bereich verringerten Widerstandes erscheint, das Verbindungsstück (12, 57) gegebenenfalls eine mittlere Längsbohrung (20) zur Aufnahme einer Schlinge oder dergleichen (21) aufweist, die zur Sicherstellung einer Verbindung zwischen dem Verankerungspfahl und der Stütze nach dem Bruch des Verbindungsstückes ausgebildet ist und der Pfahl und die Stütze jeweils eine Platte (5, 6; 31, 38; 42; 53, 55) an ihren gegenüberliegenden Enden umfassen, wobei die zwei Platten einander gegenüberstehen,
**dadurch gekennzeichnet,**
**daß** die zwei Platten jeweils eine mittlere Bohrung (11; 56, 63) aufweisen, die für die Aufnahme des Verbindungsstückes (12; 57) geeignet sind und mindestens eine der Platten eine von ihrer Mitte zum Umfang hin geneigte Fläche (10; 35; 58) derart aufweist, daß der Abstand zwischen den zwei gegenüberstehenden Platten am Umfang des Pfostens größer ist als in seiner Mitte.

2. Pfosten nach Anspruch 1, **dadurch gekennzeichnet, daß** die geneigte Fläche (10, 35; 58) der Platte eine in ihrer Gesamtform konvexe Fläche ist.

3. Pfosten nach Anspruch 1 oder Anspruch 2, **dadurch gekennzeichnet, daß** die Platte(n) in lösbarer Weise an der Stütze und/oder dem Verankerungspfahl befestigt ist(sind).

4. Pfosten nach Anspruch 1 oder Anspruch 2, **dadurch gekennzeichnet, daß** die an dem Verankerungspfahl (53) befestigte Platte aus einer ersten fest mit dem Verankerungspfahl (52) verbundenen Halbplatte (53) geformt ist und eine Lagerung (63, 54) zur Aufnahme einerseits eines Endes (64) des Verbindungsstückes (57) und andererseits einer zweiten Halbplatte (55) aufweist, die die Bohrung (56) für das Verbindungsstück (57) und die Mittel (59, 60) zur lösbaren Befestigung in der Lagerung (54) der ersten Halbplatte (53) aufweist, daß das Verbindungsstück (57) das Ende (64), z.B. einen Bund aufweist, das ausgebildet ist, um sich in der Lagerung (63) der ersten Halbplatte (53) zu plazieren und dort in lösbarer Weise festgelegt zu werden, wenn die zweite Halbplatte (55) in Stellung ist und daß vorzugsweise diese Halbplatte (55) die geneigte oder konvexe Fläche aufweist.

5. Pfosten nach einem der Ansprüche 1 bis 4, **dadurch gekennzeichnet, daß** Verankerungspfahl (30; 45) und zugehörige Platte (31; 42) untereinander lösbar befestigt und derart angeordnet sind, daß sie unterhalb des Niveaus (3a) des Bodens (3) oder im wesentlichen an diesem Niveau plaziert werden können.

6. Pfosten nach Anspruch 5, **dadurch gekennzeichnet, daß** man eine kreisförmige, ebene, nachgiebige Dichtung (41; 67, 68) zwischen den zwei Platten, vorzugsweise an ihrem Rand vorsieht, wobei der äußere Durchmesser der Dichtung vorzugsweise größer als der der Stütze ist.

7. Pfosten nach Anspruch 5, **dadurch gekennzeichnet, daß** man eine kreisförmige, ebene, nachgiebige Dichtung (82) zwischen den zwei Platten (81, 84), die zu diesen nicht hervorragt sowie eine zweite kreisförmige Dichtung (83) vorsieht, die sich an den Umfang der Dichtung (82) anlegt, wobei diese Dichtung (83) so ausgebildet ist, daß sie sich im wesentlichen an die Neigung des Bodens anpassen kann.

8. Pfosten nach einem der Ansprüche 1 und 2, **dadurch gekennzeichnet, daß** die Platte(n) in einem Stück mit der Stütze (37) und/oder dem Verankerungspfahl hergestellt ist(sind).

9. Pfosten nach einem der Ansprüche 1 und 2, **dadurch gekennzeichnet, daß** der Verankerungspfahl und zugehörige Platte ein und dasselbe Stück sind, das außerdem Befestigungsmittel aufweist, die für eine Befestigung auf einer senkrechten Fläche geeignet sind.

10. Pfosten nach einem der Ansprüche 1 bis 9, **dadurch gekennzeichnet, daß** das Verbindungsstück (12) in der Nähe mindestens eines der zwei Enden eine kreisförmige Nut (15) einschließt und die Platte eine oder mehrere Bohrungen (16) umfaßt, die dazu dienen, Mittel (17) aufzunehmen, die in die Nut eingreifen, um das Verbindungsstück (12) in Stellung zu halten, wobei diese Nut (15) außerdem von der Außenfläche des Verbindungsstükkes (12) durch eine Zone (19) mit einem konstanten oder nicht konstanten Durchmesser getrennt ist, der zwischen dem Durchmesser des Verbindungsstückes (12) und dem der Nut (15) liegt.

11. Verbindungsvorrichtung, die dazu geeignet ist, zwei Pfostenteile miteinander zu verbinden, umfassend ein Verbindungsstück mit einem Bereich verringerten Widerstandes und zwei Platten, die dazu geeignet sind, auf das Verbindungsstück montiert zu werden, **dadurch gekennzeichnet, daß** diese zwei Platten jeweils eine mittlere Bohrung mit einem Innendurchmesser leicht größer als der Außendurchmesser des Verbindungsstückes aufweisen, wobei die zwei Platten einander durch gegenüberliegende Flächen gegenüberstehen, von denen mindestens eine eine von ihrer Mitte zum Umfang, vorzugsweise in einer konvexen Gesamtform, geneigte Fläche umfaßt, wobei das Verbindungsstück ausgebildet ist, um in Bezug auf die zwei Platten lösbar festgelegt zu werden, so daß nach der Festlegung der drei Teile zueinander ein Raum zwischen den zwei Flächen verbleibt, in dem sich der Bereich verringerten Widerstandes zeigt.

## Claims

1. A post, bollard or the like (1) formed of an anchoring pile (2; 30; 45; 52) and an upright (4; 37), in particular a tube, the anchoring pile and upright being connected together by a connecting piece (12; 57) having a zone (13) of lesser resistance, the assembly being arranged such that the facing edges of the anchoring pile and of the upright leave a space (14) between them in which said zone of lesser resistance appears, the connecting piece (12; 57) possibly having a longitudinal central bore (20) which receives a sling or the like (21) shaped to provide a link between the anchoring pile and upright after the connecting piece has broken, the pile and the upright each comprising a plate (5, 6; 31; 38; 42; 53, 55) at their facing ends, the two plates facing one another, **characterised in that** the two plates each have a central bore (11; 56, 63) capable of receiving the connecting piece (12; 57) and at least one of these plates has a surface (10; 35; 58) inclined from its centre to its periphery such that the distance between the two facing plates is greater at the periphery of the post than at its centre.

2. A post according to Claim 1, **characterised in that** the inclined surface (10; 35; 58) of the plate is a surface of convex general shape.

3. A post according to Claim 1 or 2, **characterised in that** the plates are removably fastened to the upright and/or to the anchoring pile.

4. A post according to Claim 1 or 2, **characterised in that** the plate fastened to the anchoring pile (52) is formed of a first half-plate (53) integral with the anchoring pile (52) and having a housing (63, 54) for receiving firstly one end (64) of the connecting piece (57) and secondly a second half-plate (55) having the bore (56) for the connecting piece (57) and means (59, 60) for removable fastening in the housing (54) of the first half-plate (53), **in that** the connecting piece (57) has the end (64), for example a collar, shaped to be placed in the housing (63) of the first half-plate (53) and to be removably immobilised therein when the second half-plate (55) is in place, and **in that**, preferably, this half-plate (55) has the inclined or concave surface.

5. A post according to one of Claims 1 to 4, **characterised in that** the anchoring pile (30; 45) and corresponding plate (31; 42) are fastened between them removably and are arranged such that they can be placed below the level (3a) of the ground (3) or substantially at this level.

6. A post according to Claim 5, **characterised in that** a flexible flat circular joint (41; 67, 68) is provided between the two plates, preferably on their periphery, the external diameter of the joint preferably being greater than that of the upright.

7. A post according to Claim 5, **characterised in that** a flexible flat circular joint (82) is provided between the two plates (81, 84) and not extending beyond the latter, and also a second circular joint (83), which is placed on the periphery of the joint (82), this joint (83) being shaped so as to be able to adapt substantially to the inclination of the ground.

8. A post according to any one of Claims 1 and 2, **characterised in that** the plate(s) (38) are made of one piece with the upright (37) and/or the anchoring pile.

9. A post according to any one of Claims 1 and 2, **characterised in that** the anchoring pile and corresponding plate are in one and the same piece, which furthermore has fastening means suitable for fastening to a vertical surface.

10. A post according to any one of Claims 1 to 9, **characterised in that** the connecting piece (12) comprises, in the vicinity of at least one of its two ends, a circular groove (15), and the plate comprises one or more bores (16) intended to receive means (17) which are inserted into the groove to hold the connecting piece (12) in place, this groove (15) furthermore being separated from the outer surface of the connecting piece (12) by a zone (19) of a diameter, whether constant or not, which is intermediate between the diameter of the connecting piece (12) and that of the groove (15).

11. A connecting device capable of connecting together two parts of a post, comprising a connecting piece having a zone of lesser resistance and two plates capable of being mounted on the connecting piece, **characterised in that** these two plates each have a central bore having an internal diameter slightly greater than the external diameter of the connecting piece, the two plates being capable of facing each other by facing surfaces, at least one of which comprises a surface inclined from its centre towards its periphery, preferably of convex general shape, the connecting piece being designed to be able to be removably immobilised relative to the two plates, such that after immobilisation of the three pieces relative to each other there is a space between the two surfaces, in which the zone of lesser resistance appears.
